# EUROPEAN PATENT SPECIFICATION

(11) **EP 2 717 077 B1**
(45) Date of publication and mention of the grant of the patent: **06.02.2019**
(21) Application number: 13460063.4
(22) Date of filing: 19.09.2013
(51) Int. Cl.: G02B 6/036, G02B 6/10

(54) **Coaxial optical fiber with subwavelength core**
Koaxial optische Faser mit einem Kern von einer Grösse unterhalb der Wellenlänge
Fibre optique coaxial avec avec un coeur sous-longueur d'onde

(30) Priority: 02.10.2012 PL 40101912
(43) Date of publication of application: 09.04.2014
(73) Proprietor: Orange Polska S.A., 02-326 Warszawa (PL)
(72) Inventor: Kowalski, Andrzej, 02-795 Warszawa (PL)
(74) Representative: Piotrowicz, Alicja

(56) References cited:
- EP-A2- 0 105 461
- EP-A2- 0 213 778
- DE-A1- 3 325 945
- US-A- 4 134 642
- US-A1- 2007 248 308
- US-A1- 2009 135 877

## Description

The invention relates to a coaxial optical fibre as defined by claims 1 and 3, the fibre containing a core with a circular cross-section and a propagation zone and a cladding with annular cross-sections stretched around the core, with properly chosen numerical values of the lenghts of their inner and outer radii and of their refraction indices. The coaxial optical fibre is placed in the air, hereinafter called the cladding's surroundings.

The basics of construction as well as propagation properties of standard cylindrical telecommunication optical fibres are described in the book "Optical Fibers for Transmission" by J. E. Midwinter (Polish Edition: Wydawnictwo Naukowo-Techniczne, Warsaw 1983), and in "Wstep do wspó 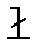 czesnej telekomunikacji swiatlowodowej" (Introduction to Modern Fibre Optic Communication) by Jerzy Siuzdak, Wydawnictwa Komunikacji i 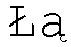 czności, Warsaw 1997. Modelling and propagation of electromagnetic waves in capillary waveguides are described in "Swiatlowody kapilarne" (Capillary Optical Fibres) by Ryszard S. Romaniuk, Oficyna Wydawnicza Politechniki Warszawskiej, Warsaw 2010.

Cylindrical optical fibres, known from literature, which constitute optical waveguides, are divided into two groups: multi-mode and single-mode. In multi-mode optical fibres, many modes are propagated, each of them being connected with a different electromagnetic field distribution, and each of them being propagated along the length of the optical fibre with a slightly different speed. In these optical fibres, the wave power is carried mostly in the core zone, which is why the properties of such a waveguide depend mainly on the optical properties of the core material. In cylindrical optical fibres, pure glass SiO₂ or PMMA (poly(methyl methacrylate)) polymer are used as optical materials. Embodiments of cylindrical optical fibres with PMMA polymer are described in European Patent Application No. EP 0126428 A2 and in Japanese Patent Description No. JP 6010692 B.

The transmission properties of glass optical fibre used in optical fibres are described in "Szklo optyczne i foniczne. Wlasnosci techniczne" (Optical & Phonic Glass. Technical Properties) by A. Szwedowski, R. S. Romaniuk, Wydawnictwo Naukowo-Techniczne, Warsaw 2009.

For transmission of signals with high data rates, in long-range transmissions or in construction of optical sensors, single-mode optical fibres are used (EP 2 402 799 A1). A single-mode optical fibre is an optical fibre with an adequately small core diameter (of several micrometres) and a small difference of refraction indices between the core and the cladding (about 1%), so that one and only one mode of an electromagnetic wave is transmitted. In such an optical fibre, the power is carried both in the core zone and in the cladding zone. Thus, the propagation properties of this optical fibre depend on the optical properties of both the core material and the cladding material. This pertains to both total attenuation and dispersion of impulses. The dispersion is a sum of material dispersion, depending on the properties of the cladding and core materials, and wave dispersion, connected with wave effects. By changing the doping profile or composition of the core material one may influence the value and the course of dispersion changes vs. wavelength of the optical signal. A low attenuation constant is achieved by using materials with a low attenuation constant for construction of the core and the cladding.

In a coaxial optical fibre, about 99% of the total power is carried in the propagation zone of the coaxial optical fibre, and attenuation of the electromagnetic wave depends mostly on the attenuation properties of the dielectric filling the propagation zone, located between the core and the cladding, with an annular cross-section perpendicular to the core's axis.

The U.S. Patent Application No. US 2012/0106909 A1 describes a large effective area optical fiber with low bend loss. It is formed of a central glass core with a maximum refractive index percentage difference Δ_{1MAX}; a first annular inner region surrounding said glass core, with a refractive index percentage difference Δ₂; a depressed annular region with a refractive index percentage difference Δ₃; and a third annular region with a refractive index percentage difference Δ₄; the relations between their numerical values satisfy a triple inequality Δ₃ < Δ₂ < Δ₄ < Δ_{1MAX}, and the refractive index percentage differences is lower than 1%.

The German patent application DE 3325945 A1 discloses a coaxial optical fiber consisting of a core, a clodding around the core, and a zone between the core and the cloding, all said layers having the circular cross-sections. On the drawings of the description, an annular cross-section of the optical fiber is presented, as well as a profile of the refractive indices n1, n2, and n3 between the core, the zone and the cladding, respectively. From these drawings one can predict that the relations between said refractive indices satisfy inequality n3<n2<n1. However, the publication discloses neither dimensions of the coaxial layers nor clearly specified numerical values of said refractive indices of the optical fiber, nor gives any information on materials said layers have been made.

The US patent application US 2007/0248308 A1 describes an optical field of concentrator which includes a plurality of waveguide layers comprising high index materials having a first defined thickness. At least one nano-layer structure is positioned between said waveguide layers. The at least one nano-layer structure comprises low index materials having a second defined thickness that is smaller than the first defined thickness. A plurality of cladding layers are positioned between the waveguide layers and the at least one nano-layer structure. The cladding layers have a third defined thickness that is larger than the first defined thickness. The publication discloses the schematic diagrams and graphs demonstrating the properties two circular structures formed from layers made of materials having low and high index. The nano-layers are made of silicon-SiO₂ system materials and have thickness of 5 to 20 nm. The thicknesses of the claddings and wavequide layers are from 80 to 200 nm. The refractive indexes of the layer materials are in the range of 1,46 to 3,5.

The US patent application No. US 2009/0135877 A1 describes a fabrication method of the coaxial line laser diodes and a coaxial lighting optical fiber which disperses and guides uniform emission of light from a coaxial line laser diode. A coaxial light-guide optical fiber has refractive index profile based on the radius and is different from the conventional optical fiber with the refractive index profile based on the diameter. The coaxial outer-cladding and axial inter-cladding have the same refractive index. Light is transmitted between the axial inter-cladding and the coaxial outer-cladding rather than through the axial area. The annular core disperses light and is interposed between the inter-cladding and the outer-cladding and has a refractive index lower that the index of inter-cladding and the outer-cladding. The publication does not give any information on materials of the core and claddings the optical fiber is composed and any information on dimensions of their radials or diameters.

The European patent application EP 0213778 A2 describes an interferometer in the form of a section of an optical fiber, whose central rod and surrounding tube are both made of low loss material (e.g. germanium). Between them there is material with the refractive index lower than the indices of the central rod and surrounding tube. The numerical values thus selected of the refractive indices of the optical fiber components, of which the interferometer is made, do not provide low attenuation and low dispersion of propagation of an optical signal in a single-mode fiber over long distances. The patent application does not consider the possibility of signal transmission in the intervening zone positioned between the rod and the outer tube.

From the application EP 0105461 A2 there is known a concentric core optical fiber with crosstalk barrier, having a multilayer structure, in which the core with a circular cross-section and its surrounding ring have the same index of refraction. The description suggests to use pure glass SiO₂ as material for both core and screen of the optical fiber.

The US patent publication No. US4134642 describes an optical fibre with increased security which has a plurality of light conducting cores surrounded by a cladding layer of lower refractive index than the cores. A light conducting layer is on the cladding layer with a refractive index higher than that of the cladding layer, and a second cladding layer surrounds the light conducting layer and has a refractive index lower than that of the light conducting layer. Data signals can be propagated in the cores and a monitoring signal in the light conducting layer. In that optical fibre with increased security, the optical signal propagation zone is composed of solid dielectrics with index or reflecting centres which constitute means reflecting the optical signal. The publication does not however give any information on materials of the cores or layers are composed as well as any information on their dimensions.

The essence of the coaxial optical fibre, according to the invention as defined by appended claims, consists in the fact that the dielectric in the propagation zone of the optical fibre is methane, whereby the radius length of the core with a circular cross-section made of pure glass SiO₂ assumes a numerical value of 0.49±5% micrometres, the outer radius of the propagation zone annulus made of methane assumes a numerical value of 42±5% micrometres, and the thickness of the cladding made of pure glass SiO₂ assumes a numerical value of 0.6±5% micrometres. The relations between the numerical values of the refraction index of the core made of pure glass SiO₂ n₁, the refraction index of the propagation zone made of methane n₂, the refraction index of the cladding made of pure glass SiO₂ n₃, and the refraction index of the cladding's surroundings n₄ satisfy a double inequality n₄ < n₂ < n₁ and an equation n₁ = n₃.

Preferably, the refraction index of the core made of pure glass SiO₂ n₁ = 1.47, the refraction index of the propagation zone n₂ = 1.00044, the refraction index of the cladding made of pure glass SiO₂ n₃ = 1.47, and the refraction index of the cladding's surroundings n₄ = 1.0003.

The essence of a variant of the coaxial optical fibre, according to the invention, consists in the fact that the dielectric in the propagation zone of the optical fibre is methane, whereby the radius of the core made of PMMA polymer assumes a numerical value of 0.49±5% micrometres, the outer radius of the propagation zone annulus made of methane assumes a numerical value of 42±5% micrometres, and the thickness of the cladding made of PMMA polymer assumes a numerical value of 0.6±5% micrometres. The relations between the numerical values of the refraction index of the core made of PMMA polymer n₁, the refraction index of the propagation zone made of methane n₂, the refraction index of the cladding made of PMMA polymer n₃, and the refraction index of the cladding's surroundings n₄ satisfy a double inequality n₄ < n₂ < n₁ and an equation n₁ = n₃.

Preferably, the refraction index of the core made of PMMA polymer n₁ = 1.48, the refraction index of the propagation zone n₂ = 1.00044, the refraction index of the cladding made of PMMA polymer n₃ = 1.48, and the refraction index of the cladding's surroundings n₄ = 1.0003.

The basic advantageous effects of using a coaxial optical fibre according to the invention (with propagation zone made of methane), over the state of the art consist in the fact that with adequately chosen numerical values of radius lengths and refraction indices, only one electromagnetic wave is transmitted via the fibre (single-mode operation), in a wavelength range of approx. 1300 nm (nanometres) to about 1800 nm (nanometres), and the optical signal suffers only low attenuation and low dispersion. About 99% of the optical signal is carried in the propagation zone, and only about 1% in the core and the cladding zones. The transmission properties of the coaxial optical fibre depend mainly on the properties of the propagation zone, which has a near-vacuum refraction index close to 1.0. Since attenuation connected with Rayleigh scattering and dispersivity (variability of wave speed vs. wavelength) decrease for materials with a refraction index close to 1.0, the coaxial optical fibre has low attenuation and good dispersion properties.

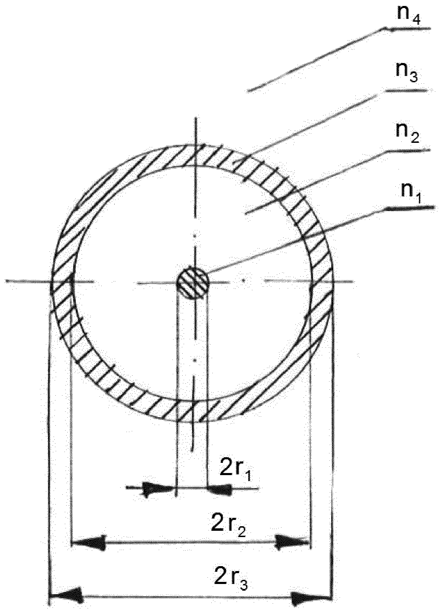

An embodiment of the coaxial optical fibre according to the invention is reproduced in the Figure in the form of a cross-section.

The embodiment of the coaxial optical fibre, according to the invention, is characterised in that the core with a circular cross-section and the cladding with an annular cross-section are made of pure glass SiO₂. The radius of the core made of pure glass SiO₂ assumes a numerical value of r₁ = 0.49±5% micrometres, the outer radius of the propagation zone annulus made of methane assumes a numerical value of r₂ = 42±5% micrometres, and the thickness of the cladding made of pure glass SiO₂ assumes a numerical value of r₃ - r₂ = 0.6±5% micrometres. The relations between the numerical values of the refraction index of the core made of pure glass SiO₂ n₁, the refraction index of the propagation zone made of methane n₂, the refraction index of the cladding made of pure glass SiO₂ n₃ and the refraction index of the cladding's surroundings n₄ satisfy a double inequality n₄ < n₂ < n₁ and an equation n₁ = n₃.

In a preferable embodiment of the coaxial optical fibre, with the core with a circular cross-section and the cladding with an annular cross-section made of pure glass SiO₂, the refraction index of the core made of pure glass SiO₂ n₁ = 1.47, the refraction index of the propagation zone n₂ = 1.00044, the refraction index of the cladding made of pure glass SiO₂ n₃ = 1.47, and the refraction index of the cladding's surroundings n₄ = 1.0003.

In an embodiment of a variant of the coaxial optical fibre, according to the invention, the core with a circular cross-section and the cladding with an annular cross-section are made of PMMA polymer. The radius of the core made of PMMA polymer assumes a numerical value of r₁ = 0.49±5% micrometres, the outer radius of the propagation zone annulus made of methane assumes a numerical value of r₂ = 42±5% micrometres, and the thickness of the cladding made of PMMA polymer assumes a numerical value of r₃ - r₂ = 0.6±5% micrometres. The relations between the numerical values of the refraction index of the core made of PMMA polymer n₁, the refraction index of the propagation zone made of methane n₂, the refraction index of the cladding made of PMMA polymer n₃ and the refraction index of the cladding's surroundings n₄ satisfy a double inequality n₄ < n₂ < n₁ and an equation n₁ = n₃.

In another preferable embodiment of the variant of the coaxial optical fibre, the refraction index of the core made of PMMA polymer n₁ = 1.48, the refraction index of the propagation zone n₂ = 1.00044, the refraction index of the cladding made of PMMA polymer n₃ = 1.48, and the refraction index of the cladding's surroundings n₄ = 1.0003.

The coaxial optical fibre according to the invention is only limited by the scope of appended claims.

## Claims

1. A coaxial optical fibre arranged to be used in air, the fibre consisting of a core with a circular cross-section and a cladding with annular cross-section, both made of pure glass SiO₂, and a propagation zone with annular cross-section stretched around the core filled with a dielectric between the core and the cladding wherein the dielectric in the propagation zone is methane, whereby the radius length of the core with a circular cross-section made of pure glass SiO₂ assumes a numerical value of r₁ = 0.49±5% micrometres, the outer radius of the propagation zone annulus made of methane assumes a numerical value of r₂ = 42±5% micrometres, and the thickness of the cladding made of pure glass SiO₂ assumes a numerical value of r₃ - r₂ = 0.6±5% micrometres, while the relations between the numerical values of the refraction index of the core made of pure glass SiO₂ n₁, the refraction index of the propagation zone made of methane n₂, the refraction index of the cladding made of pure glass SiO₂ n₃, and the refraction index n₄ of air surrounding the cladding satisfy a double inequality n₄ < n₂ < n₁ and an equation n₁ = n₃.

2. A coaxial optical fibre according to claim 1, wherein the refraction index of the core made of pure glass SiO₂ n₁ = 1.47, the refraction index of the propagation zone made of methane n₂ = 1.00044, the refraction index of the cladding made of pure glass SiO₂ n₃ = 1.47, and the refraction index of the cladding's surroundings n₄ = 1.0003.

3. A coaxial optical fibre arranged to be used in air, the fibre consisting of a core with a circular cross-section and a cladding with annular cross-section stretched around the core, both made of PMMA polymer, and a propagation zone with annular cross-section stretched around the core filled with a dielectric between the core and the cladding, wherein the dielectric in the propagation zone is methane, whereby the radius of the core made of PMMA polymer assumes a numerical value of r₁ = 0.49±5% micrometres, the outer radius of the propagation zone annulus made of methane assumes a numerical value of r₂ = 42±5% micrometres, and the thickness of the cladding made of PMMA polymer assumes a numerical value of r₃ - r₂ = 0,6±5% micrometres, while the relations between the numerical values of the refraction index of the core made of PMMA polymer n₁, the refraction index of the propagation zone made of methane n₂, the refraction index of the cladding made of PMMA polymer n₃, and the refraction index n₄ of air surrounding the cladding satisfy a double inequality n₄ < n₂ < n₁ and an equation n₁ = n₃.

4. A coaxial optical fibre, according to claim 3, wherein the refraction index of the core made of PMMA polymer n₁ = 1.48, the refraction index of the propagation zone made of methane n₂ = 1.00044, the refraction index of the cladding made of PMMA polymer n₃ = 1.48, and the refraction index of the cladding's surroundings n₄ = 1.0003.

## Patentansprüche

1. Koaxialer Lichtwellenleiter für den Einsatz in der Luft, bestehend aus einem Kern mit kreisförmigem Querschnitt und einem Mantel mit ringförmigem Querschnitt, beide aus reinem SiO₂-Glas hergestellt sind, und aus einer sich zwischen dem Kern und dem Mantel um den Kern herum erstreckenden mit einem Dielektrikum gefüllten Ausbreitungszone mit ringförmigem Querschnitt, **dadurch gekennzeichnet, dass** als Dielektrikum in der Ausbreitungszone Methan zur Anwendung kommt, wobei die Radiuslänge des Kerns mit kreisförmigem Querschnitt aus reinem SiO₂-Glas einen Zahlenwert von r₁ = 0,49±5% Mikrometer, die Länge des äußeren Radius des Kreisrings der Ausbreitungszone aus Methan einen Zahlenwert von r₂ = 42±5% Mikrometer, und die Stärke des Mantels aus reinem SiO₂-Glas einen Zahlenwert von r₃ - r₂ = 0,6±5% Mikrometer annimmt, wobei die Beziehungen zwischen den Zahlenwerten des Brechungsindexes n₁ des aus reinem SiO₂-Glas hergestellten Kerns, des Brechungsindexes n₂ der Ausbreitungszone aus Methan, des Brechungsindexes n₃ des Mantels aus reinem SiO₂-Glas sowie des Brechungsindexes n₄ der Umgebung des Mantels durch die doppelte Ungleichheit n₄ < n₂ < n₁ sowie die Gleichung n₁ = n₃ ausgedrückt werden.

2. Koaxialer Lichtwellenleiter nach Anspruch 1, **dadurch gekennzeichnet, dass** der Brechungsindex des Kerns aus reinem SiO₂-Glas n₁ = 1,47, der Brechungsindex der Ausbreitungszone aus Methan n₂ = 1,00044, der Brechungsindex des Mantels aus reinem SiO₂-Glas n₃ = 1,47 und der Brechungsindex der Umgebung des Mantels n₄ = 1,0003 beträgt.

3. Koaxialer Lichtwellenleiter für den Einsatz in der Luft, bestehend aus einem Kern mit kreisförmigem Querschnitt und aus einem sich um den Kern erstreckenden Mantel mit ringförmigem Querschnitt, beide aus PMMA-Polymer hergestellt sind, und aus einer sich zwischen dem Kern und dem Mantel um den Kern herum erstreckenden mit einem Dielektrikum gefüllten Ausbreitungszone mit ringförmigem Querschnitt, **dadurch gekennzeichnet, dass** als Dielektrikum in der Ausbreitungszone Methan zur Anwendung kommt, wobei die Radiuslänge des Kerns aus PMMA-Polymer einen Zahlenwert von r₁ = 0,49±5% Mikrometer, die Länge des äußeren Radius des Kreisrings der Methanausbreitungszone einen Zahlenwert von r₂ = 42±5% Mikrometer, und die Stärke des Mantels aus PMMA-Polymer einen Zahlenwert von r₃ - r₂ = 0,6±5% Mikrometer annimmt, wobei die Beziehungen zwischen den Zahlenwerten des Brechungsindexes n₁ des aus PMMA-Polymer hergestellten Kerns, des Brechungsindexes n₂ der Ausbreitungszone aus Methan, des Brechungsindexes n₃ des Mantels aus PMMA-Polymer sowie des Brechungsindexes n₄ der Umgebung des Mantels durch die doppelte Ungleichheit n₄ < n₂ < n₁ sowie die Gleichung n₁ = n₃ ausgedrückt werden.

4. Koaxialer Lichtwellenleiter nach Anspruch 4, **dadurch gekennzeichnet, dass** der Brechungsindex des Kerns aus PMMA-Polymer n₁ = 1,48, der Brechungsindex der Ausbreitungszone aus Methan n₂ = 1,00044, der Brechungsindex des Mantels aus PMMA-Polymer n₃ = 1,48 und der Brechungsindex der Umgebung des Mantels n₄ = 1,0003 beträgt.

## Revendications

1. Fibre optique coaxiale conçue pour être utilisée dans l'air, la fibre étant constituée d'un noyau à section transversale circulaire et d'une gaine à section transversale annulaire, toutes les deux en verre pur SiO₂, et d'une zone de propagation à section transversale annulaire tendu autour du noyau rempli d'un diélectrique entre le noyau et la gaine, **caractérisée en ce que** le diélectrique dans la zone de propagation est du méthane, la longueur du rayon du noyau à section transversale circulaire en verre pur SiO₂ assume une valeur numérique de r₁ = 49 ± 5% micromètres, le rayon extérieur de l'anneau de la zone de propagation en méthane assume une valeur numérique de r₂ = 42 ± 5% micromètres, et l'épaisseur de la gaine en verre pur SiO₂ assume une valeur numérique de r₃ - r₂ = 0,6 ± 5% micromètres, tandis que les relations entre les valeurs numériques de l'indice de réfraction du noyau en verre pur SiO₂ n₁, l'indice de réfraction de la zone de propagation en méthane n₂, l'indice de réfraction de la gaine en verre pur SiO₂ n₃, et l'indice de réfraction n₄ d'air entourant la gaine vérifient une double inégalité n₄ < n₂ < n₁ et une équation n₁ = n₃.

2. Fibre optique coaxiale selon la revendication 1, **caractérisée en ce que** l'indice de réfraction du noyau en verre pur SiO₂ n₁ = 1,47, l'indice de réfraction de la zone de propagation en méthane n₂ = 1,00044, l'indice de réfraction de la gaine en verre pur verre SiO₂ n₃ = 1,47, et l'indice de réfraction de l'environnement de la gaine n₄ = 1,0003.

3. Fibre optique coaxiale conçue pour être utilisée dans l'air, la fibre étant composée d'un noyau à section transversale circulaire et d'une gaine à section transversale annulaire tendue autour du noyau, tous les deux en polymère PMMA, et d'une zone de propagation à section transversale annulaire tendu autour du noyau rempli d'un diélectrique entre le noyau et la gaine, **caractérisée en ce que** le diélectrique dans la zone de propagation est du méthane, le rayon du noyau en polymère PMMA assume une valeur numérique de r₁ = 0,49 ± 5% micromètres, le rayon extérieur de l'anneau de la zone de propagation en méthane assume une valeur numérique de r₂ = 42 ± 5% micromètres, et l'épaisseur de la gaine en polymère PMMA assume une valeur numérique de r₃ - r₂ = 0,6 ± 5% micromètres, tandis que les relations entre les valeurs numériques de l'indice de réfraction du noyau en polymère PMMA n₁, l'indice de réfraction de la zone de propagation en méthane n₂, l'indice de réfraction de la gaine en polymère PMMA n₃, et l'indice de réfraction n₄ d'air entourant la gaine vérifient une double inégalité n₄ < n₂ < n₁ et une équation n₁ = n₃.

4. Fibre optique coaxiale selon la revendication 3, **caractérisée en ce que** l'indice de réfraction du noyau en polymère PMMA n₁ = 1,48, l'indice de réfraction de la zone de propagation en méthane n₂ = 1,00044, l'indice de réfraction de la gaine en polymère PMMA n₃ = 1,48 et l'indice de réfraction de l'environnement de la gaine n₄ = 1,0003.
